# EUROPEAN PATENT APPLICATION

(11) **EP 4 838 645 A1**
(43) Date of publication of application: **11.11.2026**
(21) Application number: 26175037.6
(22) Date of filing: 28.04.2026
(51) Int. Cl.: H01M 50/15, H01M 50/55, H01M 50/103, H01M 50/188, H01M 50/557

(54) **LID ASSEMBLY, METHOD OF ASSEMBLING THE SAME, AND CELL**

(30) Priority: 09.05.2025 CN 202510596516; 29.08.2025 CN 202511236169
(71) Applicant: AESC Japan Ltd., Yokohama-shi, Kanagawa 220-0012 (JP)
(72) Inventor: CHEN, Hu, 214443 Jiangyin City, Wuxi City (TW)
(74) Representative: Becker, Eberhard

(57) **Abstract**

A lid assembly (1000), a method of assembling the same, and a cell are provided. The lid assembly (1000) includes a lid (100), an electrode terminal (200), and an insulating and sealing structure (700). The lid (100) and the electrode terminal (200) are connected through the insulating and sealing structure (700). The lid (100) includes a lid base (110), a first fixing portion (120), and a second fixing portion (130). The first fixing portion (120) and the second fixing portion (130) extend from two opposite surfaces of the lid base (110) and define an accommodating space (140). The electrode terminal (200) and the insulating and sealing structure (700) are located in the accommodating space (140). In a first direction, projections of the first fixing portion (120) and the electrode terminal (200) do not overlap, and projections of the second fixing portion (130) and the electrode terminal (200) overlap.

## Description

### BACKGROUND

### Technical Field

The disclosure relates to the field of battery technology, and particularly, relates to a lid assembly, a method of assembling the same, and a cell.

### Description of Related Art

In the development of battery technology, in addition to the improvement of cell performance, safety issues are also problems that cannot be ignored. If the safety of cells cannot be ensured, the cells cannot be used. Therefore, how to enhance the safety of cells is a technical problem that urgently needs to be solved in battery technology.

### SUMMARY

In view of the above, the disclosure aims to provide a lid assembly, a method of assembling the same, and a cell to at least partially solve the problem of how to enhance the safety of cells.

To achieve the above, in the first aspect, the disclosure provides a lid assembly including a lid, an electrode terminal, and an insulating and sealing structure. The lid and the electrode terminal are connected through the insulating and sealing structure. The lid includes a lid base, a first fixing portion, and a second fixing portion. The first fixing portion and the second fixing portion are arranged surrounding the electrode terminal. The lid base includes a first surface and a second surface arranged opposite to each other in a first direction. The first fixing portion extends from the first surface at least in the first direction toward a direction away from the lid base, and the second fixing portion extends from the second surface at least in a second direction toward a centerline of the electrode terminal. The first fixing portion and the second fixing portion define an accommodating space, and the electrode terminal and the insulating and sealing structure are at least partially located in the accommodating space. The first direction is a centerline direction of the electrode terminal, and the second direction is perpendicular to the first direction. In the first direction, projections of the first fixing portion and the electrode terminal do not overlap, and projections of the second fixing portion and the electrode terminal overlap.

Optionally, the electrode terminal includes a columnar electrode terminal base and a protruding portion protruding from the electrode terminal base in the second direction, and in the first direction, projections of the second fixing portion and the protruding portion overlap.

Optionally, the protruding portion, the first fixing portion, and the second fixing portion are all annular structures, a minimum diameter of an inner hole formed by the first fixing portion is D₁, a minimum diameter of an inner hole formed by the second fixing portion is D₂, and a maximum outer diameter of the protruding portion is D₃, where D₂<D₃< D₁.

Optionally, the first fixing portion includes a first end away from the lid base, and a portion of the first fixing portion close to the first end extends toward the centerline of the electrode terminal.

Optionally, in the first direction, a minimum linear spacing distance between the first end and the protruding portion is H₁, 0.9 mm≤ H₁≤1.2 mm, and in the second direction, a minimum linear spacing distance between the first end and the electrode terminal is L₁, where 0.3 mm≤ L₁≤0.5 mm.

Optionally, the second fixing portion further extends from the second surface in the first direction toward a direction away from the lid base, such that the second fixing portion protrudes from the lid base in the first direction.

Optionally, an edge of the protruding portion close to the first end is provided with a chamfer, and/or an edge of the first end close to the protruding portion is provided with a chamfer.

Optionally, the first fixing portion includes a first inner wall, the second fixing portion includes a second inner wall, and the accommodating space is formed by the first inner wall, the second inner wall, and a transition portion connecting the first inner wall and the second inner wall.

Optionally, the transition portion includes an inclined surface, an arc surface, or a stepped surface connected to the first inner wall and the second inner wall.

Optionally, the insulating and sealing structure includes a sealing portion, and the sealing portion is at least located between the protruding portion and the second inner wall and extends in the second direction between the protruding portion and the transition portion.

Optionally, in the first direction, projections of the sealing portion, the protruding portion, and the second inner wall partially overlap, and a minimum dimension of an overlapping region in the second direction is L₂, where L₂≥0.8 mm.

Optionally, the insulating and sealing structure includes an upper insulating portion, the electrode terminal is connected to the first fixing portion through the upper insulating portion, and the upper insulating portion is connected to the sealing portion and fills the accommodating space.

Optionally, the upper insulating portion extends to a side of the first fixing portion away from the accommodating space and is connected to the first surface.

Optionally, in the first direction, the upper insulating portion includes a fourth surface away from the second surface, the first fixing portion includes a fifth surface away from the second surface, and the fourth surface is located on a side of the fifth surface away from the second surface. A minimum linear distance between the fourth surface and the fifth surface is H₂, where H₂≥0.2 mm.

Optionally, the first end includes a first end surface close to the electrode terminal base in the second direction, the fifth surface is connected to the first end surface, and at least a partial region of the fifth surface is parallel to the fourth surface.

Optionally, in the second direction, the first fixing portion includes a first outer side wall away from the accommodating space, the second fixing portion includes a second outer side wall away from the accommodating space, the first outer side wall is connected to the first surface and forms a first connecting portion, and the second outer side wall is connected to the second surface and forms a second connecting portion. In the second direction, a linear distance from the first connecting portion to the centerline of the electrode terminal is L₃, and a linear distance from the second connecting portion to the centerline of the electrode terminal is L₄, where L₄< L₃.

Optionally, the second surface is provided with a material squeezing groove surrounding the second fixing portion. In the second direction, the material squeezing groove extends to the second connecting portion, and in the first direction, a projection of the first connecting portion on the second surface is located within the material squeezing groove.

Optionally, the electrode terminal base includes a second end surface close to the fourth surface in the first direction, and in the first direction, the second end surface at least partially extends beyond the fourth surface.

Optionally, the insulating and sealing structure includes an upper insulating portion. The first fixing portion is provided with a first anti-rotation structure, and the upper insulating portion is formed with a first insulating anti-rotation structure. One of the first anti-rotation structure and the first insulating anti-rotation structure is a groove structure, and the other is a protruding structure fitted within the groove structure.

Further/Alternatively, the electrode terminal is provided with a second anti-rotation structure, and the upper insulating portion is formed with a second insulating anti-rotation structure. One of the second anti-rotation structure and the second insulating anti-rotation structure is a groove structure, and the other is a protruding structure fitted within the groove structure.

Based on the same inventive concept, in the second aspect, the disclosure further provides a method of assembling a lid assembly used for manufacturing the lid assembly according to the first aspect. The method of assembling the lid assembly includes the following steps.

In a preparation step, a lid is provided.

In a sleeving step, a sealing portion is sleeved onto an electrode terminal.

In an installation step, the electrode terminal sleeved with the sealing portion is placed in an accommodating space, so that the sealing portion is positioned between the electrode terminal and the second fixing portion.

In an injection molding step, an upper insulating portion is formed by injection molding at least in the accommodating space, the upper insulating portion and the sealing portion are combined to form an insulating and sealing structure, and the electrode terminal and the lid are connected through the insulating and sealing structure.

Optionally, in the first direction, the electrode terminal includes a third end surface close to the second fixing portion, and the third end surface is provided with a first positioning hole.

After the installation step and before the injection molding step, the method of assembling the lid assembly further includes the following.

In a positioning step, the electrode terminal is positioned in the second direction through the first positioning hole.

Optionally, in the first direction, the electrode terminal includes a third end surface close to the second fixing portion.

After the installation step and before the injection molding step, the method of assembling the lid assembly further includes the following.

In a positioning step, in the first direction, the third end surface is allowed to extend beyond the second fixing portion, and the electrode terminal is positioned in the second direction through an edge of the third end surface.

Optionally, the electrode terminal base includes a second end surface close to the first fixing portion in the first direction, and the second end surface includes a first portion and a second portion surrounding the first portion. In the first direction, the first portion protrudes from the second portion in a direction away from the second fixing portion.

The injection molding step includes the following.

An injection molding mold is fixed through the second portion, and the upper insulating portion is formed by injection molding through the injection molding mold, so that the upper insulating portion does not extend beyond the second portion in the first direction.

Optionally, the electrode terminal includes the columnar electrode terminal base and the protruding portion protruding from the electrode terminal base in the second direction. The sealing portion is provided with an avoidance groove, and a connecting structure is formed between a circumferential side wall of the electrode terminal base and the protruding portion.

The sleeving step includes the following.

The sealing portion is sleeved onto the electrode terminal, and the avoidance groove is allowed to correspond to the connecting structure.

Based on the same inventive concept, in the third aspect, the disclosure further provides a cell including the lid assembly according to the first aspect.

From the above, it can be seen that in the lid assembly, the method of assembling the same, and cell provided by the disclosure, in the first direction, the projections of the first fixing portion and the electrode terminal do not overlap, so that the electrode terminal can pass through the inner hole formed by the first fixing portion to enter the accommodating space. Therefore, before assembling the electrode terminal, the forming of the first fixing portion and the second fixing portion can be completed according to the design structure, and the metal foreign object in the accommodating space can be removed relatively thoroughly. After the electrode terminal is loaded into the accommodating space, since no further processing and shaping are performed on the first fixing portion and the second fixing portion, generation of new metal foreign objects in the accommodating space is also prevented, so that the electrical clearance and the creepage distance between the lid and the electrode terminal can be increased, the insulating performance of the insulating and sealing structure is improved, and the safety performance of the cell is thus enhanced.

Meanwhile, in the first direction, the projections of the second fixing portion and the electrode terminal overlap, so the electrode terminal cannot pass through the inner hole enclosed by the second fixing portion, and the portion of the electrode terminal located in the accommodating space can be limited by the second fixing portion. As such, this portion of the electrode terminal remains in the accommodating space, and the connection reliability between the electrode terminal and the lid is thus improved.

### BRIEF DESCRIPTION OF THE DRAWINGS

In order to more clearly explain the technical solutions in the disclosure or related art, the drawings required in the description of the embodiments or related art are to be briefly introduced below. Obviously, the drawings described in the following paragraphs are merely embodiments of the disclosure. For a person having ordinary skill in the art, other drawings may be obtained based on these drawings without inventive labor.
FIG. 1 is a partial cross-sectional schematic view of a cell of a first structure according to an embodiment of the disclosure.
FIG. 2 is a partial schematic top view of a lid assembly of a second structure according to an embodiment of the disclosure.
FIG. 3 is a schematic cross-sectional view of a section A-A in FIG. 2.
FIG. 4 is an enlarged schematic view of a portion B in FIG. 3.
FIG. 5 is an enlarged schematic view of a lid assembly of a third structure at the portion B in FIG. 3 according to an embodiment of the disclosure.
FIG. 6 is an enlarged schematic view of a portion C in FIG. 5.
FIG. 7 is an enlarged schematic view of a fourth structure of the portion C in FIG. 5.
FIG. 8 is an enlarged schematic view of a fifth structure of the portion C in FIG. 5.
FIG. 9 is a flow chart of a method of assembling a lid assembly according to an embodiment of the disclosure.
FIG. 10 is a partial cross-sectional schematic view of the lid assembly of the third structure before an electrode terminal is assembled according to an embodiment of the disclosure.
FIG. 11 is a partial cross-sectional schematic view of the electrode terminal connected with a sealing portion in the lid assembly of the third structure according to an embodiment of the disclosure.
FIG. 12 is a partial cross-sectional schematic view of the electrode terminal in the lid assembly of the third structure inserted into an accommodating space according to an embodiment of the disclosure.
FIG. 13 is a partial cross-sectional schematic view of an electrode terminal in a lid assembly of a sixth structure inserted into the accommodating space according to an embodiment of the disclosure.
FIG. 14 is a partial cross-sectional schematic view of pressing the electrode terminal through an injection molding mold in the lid assembly of the third structure according to an embodiment of the disclosure.
FIG. 15 is a partial cross-sectional schematic view of the lid assembly of the third structure after an upper insulating portion is formed according to an embodiment of the disclosure.
FIG. 16 is a schematic view of a cell according to an embodiment of the disclosure.

### DESCRIPTION OF THE EMBODIMENTS

In order to make the purpose, technical solutions, and advantages of the disclosure more clear and understandable, the disclosure is further described in detail in combination with specific embodiments and with reference to the accompanying drawings.

It should be noted that the relative arrangement of the components, the numerical expressions, and numerical values set forth in these embodiments do not limit the scope of the disclosure unless specifically stated otherwise.

Meanwhile, it should be understood that for ease of description, the dimensions of various parts shown in the drawings are not drawn according to actual proportional relationships.

The following description of at least one exemplary embodiment is merely illustrative in nature and is in no way intended to limit the disclosure and its application or uses in any way.

It should be noted that, unless otherwise defined, the technical terms or scientific terms used in the embodiments of the disclosure should be understood in the general sense by a person having ordinary skill in the art. The words "first", "second", and similar words used in the embodiments of the disclosure do not indicate any order, quantity, or importance, but are only used to distinguish different components. Words such as "include" or "contain" mean that the elements or objects appearing before the word cover the elements or objects listed after the word and their equivalents, without excluding other elements or objects. Words such as "connect" or "connected" are not limited to physical or mechanical connections, but may include electrical connections, whether direct or indirect. "Up", "down", "left", "right", etc. are only used to indicate relative positional relationships, and when the absolute position of the described object changes, the relative positional relationship may also change accordingly.

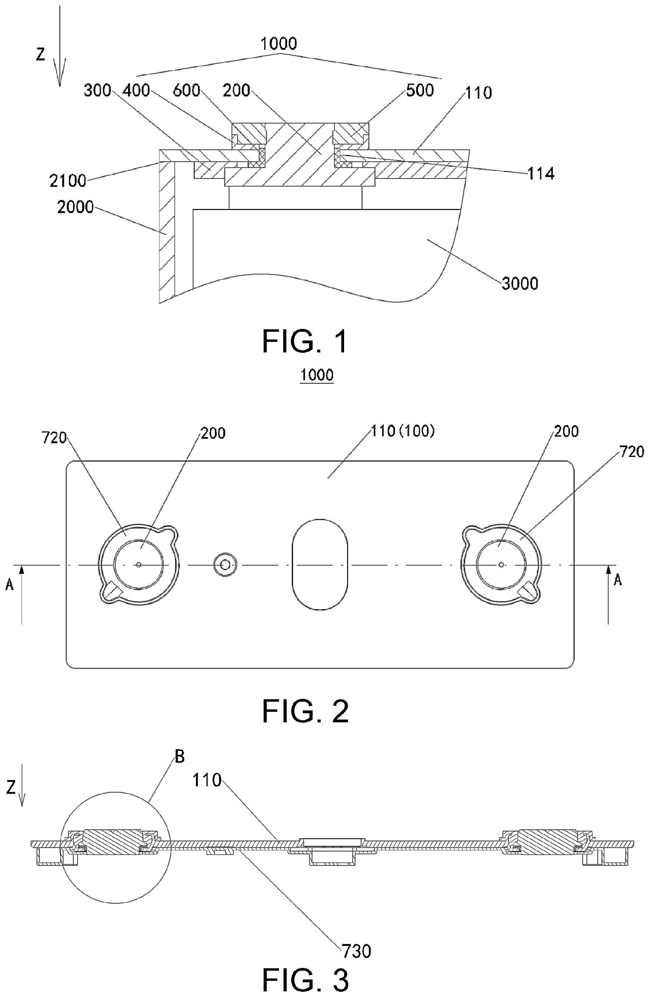

FIG. 1 shows a partial cross-sectional schematic view of a cell of a first structure.

As shown in FIG. 1, in some embodiments, a cell includes a lid assembly 1000 and a housing 2000. The lid assembly 1000 includes a lid base 110, and the lid base 110 is provided with an installation hole 114 penetrating therethrough in a thickness direction (e.g., Z direction in FIG. 1) thereof. The lid base 110 covers and is connected to an opening end 2100 of the housing 2000, so that the lid base 110 and the housing 2000 together form a space for accommodating an electrode assembly 3000. A lower insulating member 300 is connected to a side of the lid base 110 close to the electrode assembly 3000, and an upper insulating member 400 is connected to a side of the lid base 110 away from the electrode assembly 3000. The lid assembly 1000 further includes an electrode terminal 200 sleeved with a sealing ring 600. The electrode terminal 200 is inserted through the lower insulating member 300, the lid base 110, and the upper insulating member 400. One end of the electrode terminal 200 away from the electrode assembly 3000 extends out of the upper insulating member 400 and is riveted and connected to a riveting block 500. The electrode terminal 200 and the lid base 110 press the sealing ring 600, so as to seal between the electrode terminal 200 and the lid base 110 through the sealing ring 600 and insulate between the electrode terminal 200 and the lid base 110 through the upper insulating member 400 and the lower insulating member 300.

Combining the foregoing, it can be known that in this embodiment, in order to achieve insulating, sealing, and connecting between the electrode terminal 200 and the lid base 110, at least the lower insulating member 300, the sealing ring 600, the upper insulating member 400, and the riveting block 500 need to be provided, so more components and higher material costs are required. Meanwhile, during the process of assembling the electrode terminal 200 to the lid base 110, processes such as bonding (for example, connecting the lower insulating member 300 and the lid base 110) and riveting (for example, connecting the riveting block 500 and the electrode terminal 200) are also required, making the assembly process relatively complex and the assembly efficiency relatively low.

In order to solve the above problems, in the embodiments of the disclosure, lid assemblies 1000 of other structures are provided.

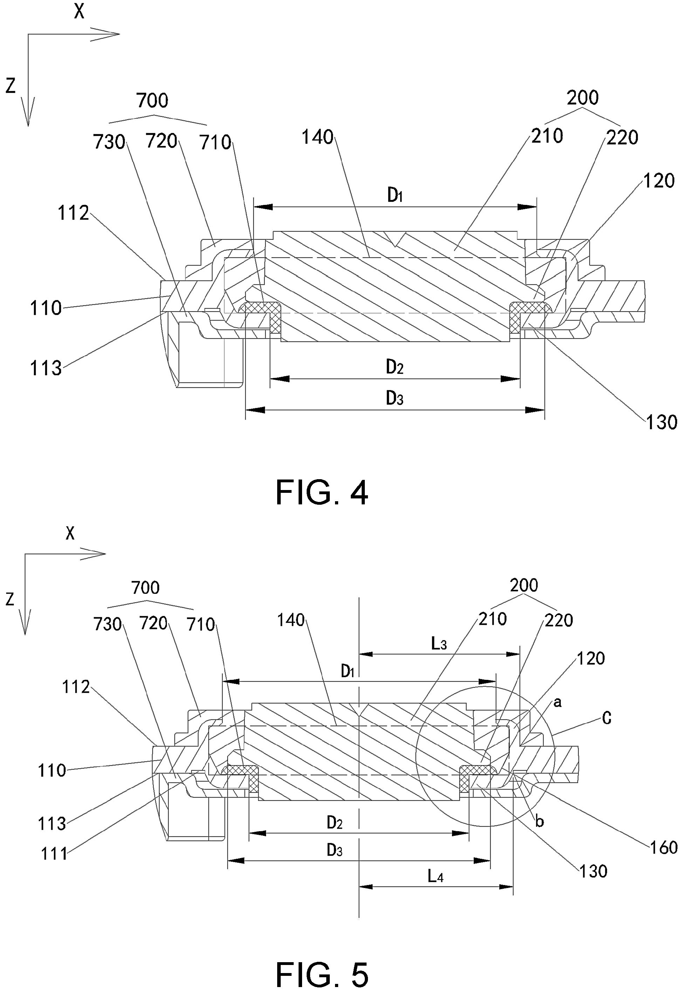

FIG. 2 shows a partial schematic top view of a lid assembly 1000 of a second structure, FIG. 3 shows a schematic cross-sectional view of a section A-A in FIG. 2, and FIG. 4 shows an enlarged schematic view of a portion B in FIG. 3.

As shown in FIG. 2 and FIG. 3, in some embodiments, the lid assembly 1000 includes a lid 100, an electrode terminal 200, and an insulating and sealing structure 700. The lid 100 and the electrode terminal 200 are connected through the insulating and sealing structure 700. Exemplarily, the electrode terminal 200 may include a positive electrode terminal and a negative electrode terminal. The positive electrode terminal is used for electrical connection with a positive tab of the electrode assembly 3000 (the positive tab is formed by a current collector of a positive electrode sheet of the electrode assembly 3000 extending outward) to form a positive electrode of the cell. The negative electrode terminal is used for electrical connection with a negative tab of the electrode assembly 3000 (the negative tab is formed by a current collector of a negative electrode sheet of the electrode assembly 3000 extending outward) to form a negative electrode of the cell.

As shown in FIG. 3 and FIG. 4, the lid 100 includes the lid base 110, a first fixing portion 120, and a second fixing portion 130. The first fixing portion 120 and the second fixing portion 130 are arranged surrounding the electrode terminal 200. The lid base 110 includes a first surface 112 and a second surface 113 arranged opposite to each other in a first direction (e.g., Z direction in FIG. 4). The first fixing portion 120 extends from the first surface 112 at least in the first direction toward a direction away from the lid base 110. The second fixing portion 130 extends from the second surface 113 at least in a second direction (e.g., X direction in FIG. 4) toward a centerline of the electrode terminal 200. The first fixing portion 120 and the second fixing portion 130 define an accommodating space 140. The electrode terminal 200 and the insulating and sealing structure 700 are at least partially located in the accommodating space 140. The first direction is a centerline direction of the electrode terminal 200, and the second direction is perpendicular to the first direction.

Exemplarily, when the lid assembly 1000 is applied to a cell, the second surface 113 is close to the electrode assembly 3000.

Exemplarily, the insulating and sealing structure 700 includes a lower insulating portion 730 connected to a side of the lid 100 close to the second surface 113.

Exemplarily, the first fixing portion 120 and the lid base 110 may be connected by welding or integrally-formed connection. Similarly, the second fixing portion 130 and the lid base 110 may be connected by welding or integrally-formed connection. It should be noted that the connection manner between the first fixing portion 120 and the lid base 110 may be the same as or different from the connection manner between the second fixing portion 130 and the lid base 110. Integrally-formed connection is preferred for a more stable structure.

It should be noted that the first fixing portion 120 extending from the first surface 112 at least in the first direction toward a direction away from the lid base 110 does not mean that an end of the first fixing portion 120 close to the lid base 110 is disposed on the first surface 112, but only indicates that the first fixing portion 120 extends out of the lid base 110 from the first surface 112. The first fixing portion 120 may also extend into a space between the first surface 112 and the second surface 113. Similarly, the second fixing portion 130 extending from the second surface 113 at least in the second direction toward the centerline of the electrode terminal 200 does not mean that an end of the second fixing portion 130 close to the lid base 110 is disposed on the second surface 113. The second fixing portion 130 may also extend into a space between the first surface 112 and the second surface 113.

By comparing FIG. 1 and FIG. 4, it can be known that compared with the lid assembly 1000 of the first structure, in the lid assembly 1000 of the second structure provided in this embodiment, the riveting block 500 and the upper insulating member 400 are at least eliminated, and fixing the electrode terminal 200 and insulating between the electrode terminal 200 and the lid 100 are achieved at the same time through the insulating and sealing structure 700.

The applicant's research found out that as shown in FIG. 4, in order to enable at least portions of both the electrode terminal 200 and the insulating and sealing structure 700 to be installed into the accommodating space 140, it is necessary to enable both to pass through the first fixing portion 120 or the second fixing portion 130. If areas of an inner hole formed by the first fixing portion 120 after forming (hereinafter referred to as a first inner hole) and an inner hole formed by the second fixing portion 130 (hereinafter referred to as a second inner hole) are both excessively small to allow at least portions of the electrode terminal 200 and the insulating and sealing structure 700 to pass through, then it is necessary to pre-form the first fixing portion 120 or the second fixing portion 130, at which time the first fixing portion 120 or the second fixing portion 130 has not yet formed the designed structure. Next, at least portions of the electrode terminal 200 and the insulating and sealing structure 700 are first disposed in the accommodating space 140, and then further mechanical processing is performed on the pre-formed first fixing portion 120 or the second fixing portion 130, so as to enable the first fixing portion 120 and the second fixing portion 130 to form the designed structure.

However, if the electrode terminal 200 is assembled first and mechanical processing is then performed on the first fixing portion 120 or the second fixing portion 130, a metal foreign object (e.g., metal chips or metal burrs) generated during mechanical processing may enter the accommodating space 140. Since the electrode terminal 200 has already been installed in the accommodating space 140 at this time, and the electrode terminal 200 may cause obstruction to the first inner hole and the second inner hole, it is difficult to completely remove the metal foreign object. This metal foreign object may reduce an electrical clearance and a creepage distance between the lid 100 and the electrode terminal 200, and the metal foreign object may also adversely affect the insulating performance of the insulating and sealing structure 700.

In order to solve the above problems, this embodiment provides the lid assembly 1000 of a third structure.

FIG. 5 shows an enlarged schematic view of a lid assembly 1000 of a third structure at the portion B in FIG. 3.

As shown in FIG. 5, in some embodiments, in the first direction, projections of the first fixing portion 120 and the electrode terminal 200 do not overlap, and projections of the second fixing portion 130 and the electrode terminal 200 overlap.

It should be noted that cross-sectional outer contour shapes of the first inner hole, the second inner hole, and the electrode terminal 200 perpendicular to the centerline of the electrode terminal 200 may be circular or polygonal, which are not limited herein.

It can be understood that in this embodiment, in the first direction, the projections of the first fixing portion 120 and the electrode terminal 200 do not overlap, so the electrode terminal 200 may pass through the first inner hole. Meanwhile, the projections of the second fixing portion 130 and the electrode terminal 200 overlap, so the electrode terminal 200 cannot pass through the second inner hole.

Specifically, taking the structure and direction shown in FIG. 5 as an example for illustration, when assembling the lid assembly 1000, before assembling the electrode terminal 200 to the lid 100, the first fixing portion 120 and the second fixing portion 130 have already been formed according to the design structure and do not require further mechanical processing. At this time, even if a metal foreign object is present in the accommodating space 140, since structural components have not yet been assembled in the accommodating space 140, both the first inner hole and the second inner hole are in an open state, and the vacant accommodating space 140 may be thoroughly cleaned relatively easily to remove the metal foreign object therein.

After confirming that no metal foreign object is present in the accommodating space 140, the electrode terminal 200 is then inserted into the accommodating space 140 from one side of the first fixing portion 120. The electrode terminal 200 may pass through the first inner hole in the first direction. After the electrode terminal 200 enters the accommodating space 140, at least a portion thereof will be blocked and limited by the second fixing portion 130, so that at least a portion of the electrode terminal 200 remains in the accommodating space 140. Subsequently, the insulating and sealing connection between the electrode terminal 200 and the lid 100 may be completed through the insulating and sealing structure 700.

In the lid assembly 1000 provided by this embodiment, in the first direction, the projections of the first fixing portion 120 and the electrode terminal 200 do not overlap, so the electrode terminal 200 may pass through the first inner hole to enter the accommodating space 140. Therefore, before assembling the electrode terminal 200, the forming of the first fixing portion 120 and the second fixing portion 130 may be completed according to the design structure, and the metal foreign object in the accommodating space 140 may be removed relatively thoroughly. After the electrode terminal 200 is loaded into the accommodating space 140, since no further processing and shaping are performed on the first fixing portion 120 and the second fixing portion 130, generation of new metal foreign objects in the accommodating space 140 is also prevented, so that the electrical clearance and the creepage distance between the lid 100 and the electrode terminal 200 may be increased, the insulating performance of the insulating and sealing structure 700 is improved, and the safety performance of the cell is thus enhanced.

Meanwhile, in the first direction, the projections of the second fixing portion 130 and the electrode terminal 200 overlap, so the electrode terminal 200 cannot pass through the second inner hole, and the portion of the electrode terminal 200 located in the accommodating space 140 may be limited by the second fixing portion 130. As such, this portion of the electrode terminal 200 remains in the accommodating space 140, and the connection reliability between the electrode terminal 200 and the lid 100 is thus improved.

As shown in FIG. 5, in some embodiments, the electrode terminal 200 includes a columnar electrode terminal base 210 and a protruding portion 220 protruding from the electrode terminal base 210 in the second direction. In the first direction, projections of the second fixing portion 130 and the protruding portion 220 overlap.

Exemplarily, the electrode terminal base 210 may be a cylinder or a polygonal column having a centerline.

Exemplarily, a shape of an outer contour of the protruding portion 220 perpendicular to the centerline of the electrode terminal 200 may be the same as or different from a shape of an outer contour of the electrode terminal base 210 perpendicular to the centerline of the electrode terminal 200.

Exemplarily, the electrode terminal base 210 and the protruding portion 220 may be connected by welding or integrally-formed connection.

Exemplarily, the protruding portion 220 may be arranged around a circumferential side wall of the electrode terminal base 210, and the circumferential side wall of the electrode terminal base 210 is arranged around the centerline of the electrode terminal 200.

In this embodiment, after the protruding portion 220 passes through the first inner hole and enters the accommodating space 140, the second fixing portion 130 limits the protruding portion 220 located in the accommodating space 140, so that the protruding portion 220 remains in the accommodating space 140. An end portion of the electrode terminal base 210 may pass through the second inner hole and extend out of the accommodating space 140, so as to facilitate electrical connection with a tab of the electrode assembly 3000.

As shown in FIG. 5, in some embodiments, the protruding portion 220, the first fixing portion 120, and the second fixing portion 130 are all annular structures. A minimum diameter of the inner hole formed by the first fixing portion 120 is D₁, a minimum diameter of the inner hole formed by the second fixing portion 130 is D₂, a maximum outer diameter of the protruding portion 220 is D₃, and D₂<D₃< D₁.

It should be noted that in combination with the foregoing, the second fixing portion 130 extends at least in the second direction toward the centerline of the electrode terminal 200, so an end portion of the second fixing portion 130 away from the lid base 110 is closer to the centerline of the electrode terminal 200 relative to other portions of the second fixing portion 130, and the diameter of the inner hole formed by this end portion is D₂. Similarly, the diameter of the inner hole formed by the portion of the first fixing portion 120 closest to the centerline of the electrode terminal 200 is D₁.

When the electrode terminal 200 passes through the first inner hole, it is necessary to align the protruding portion 220 with the first inner hole. If the first fixing portion 120 and the protruding portion 220 are both annular structures, there is no need to rotate the electrode terminal 200 when the protruding portion 220 is aligned with the first inner hole. Compared with polygonal ring structures, this may facilitate the alignment of the protruding portion 220 with the first inner hole, so that the assembly efficiency of the lid assembly 1000 is improved.

Meanwhile, the second fixing portion 130 is an annular structure, which may apply relatively uniform supporting force to the protruding portion 220, and may limit the protruding portion 220 more stably and effectively.

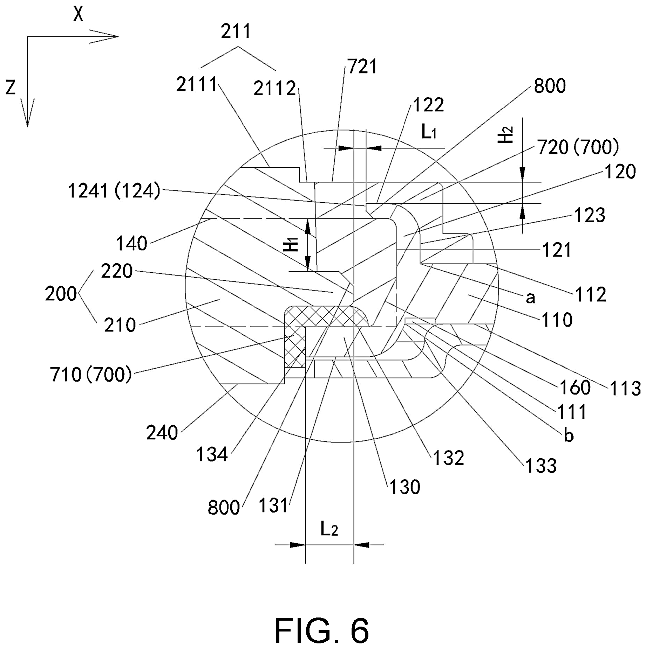

FIG. 6 shows an enlarged schematic view of a portion C in FIG. 5.

As shown in FIG. 5 and FIG. 6, in some embodiments, the first fixing portion 120 includes a first end 124 away from the lid base 110, and a portion of the first fixing portion 120 close to the first end 124 extends toward the centerline of the electrode terminal 200.

The portion of the first fixing portion 120 close to the lid base 110 extends in the first direction toward the direction away from the lid base 110, and the portion close to the first end 124 extends toward the centerline of the electrode terminal 200, that is, the first fixing portion 120 has a bent structure.

The portion of the first fixing portion 120 close to the first end 124 may limit structural components (e.g., part of the insulating and sealing structure 700) in the accommodating space 140 in the first direction, so that the above structural components are kept more stably in the accommodating space 140, and a more stable and reliable insulating and sealing connection is thus formed between the electrode terminal 200 and the lid 100.

As shown in FIG. 6, in some embodiments, in the centerline direction of the electrode terminal 200, a minimum linear spacing distance between the first end 124 and the protruding portion 220 is H₁, where 0.9 mm≤ H₁≤1.2 mm. In the second direction, a minimum linear spacing distance between the first end 124 and the electrode terminal 200 is L₁, where 0.3 mm≤ L₁≤0.5 mm.

Exemplarily, H₁ may be 0.9 mm, 0.95 mm, 1 mm, 1.05 mm, 1.1 mm, 1.15 mm, or 1.2 mm.

Exemplarily, L₁ may be 0.3 mm, 0.35 mm, 0.4 mm, 0.45 mm, or 0.5 mm.

If H₁ is excessively small, then in the first direction, the spacing distance between the first end 124 and the protruding portion 220 is excessively small, and a thickness of the portion of the insulating and sealing structure 700 located between the two is excessively small. During the assembly and use of the lid assembly 1000, the above portion of the insulating and sealing structure 700 may fracture under the combined action of the first end 124 and the protruding portion 220, and the insulating performance, sealing performance, and structural strength of the insulating and sealing structure 700 may thus be adversely affected. Since a top end of the electrode terminal 200 needs to extend beyond the first end 124 at least in the first direction, if H₁ is excessively large, it may cause a size of the electrode terminal 200 (i.e., a height of the electrode terminal 200) in the first direction to be excessively large, resulting in increased material costs of the electrode terminal 200. A space occupied by the electrode terminal 200 in the first direction may also increase, and that energy density of the cell is adversely affected.

If L₁ is excessively small, then in the second direction, the spacing distance between the first end 124 and the protruding portion 220 is excessively small, and a width of the portion of the insulating and sealing structure 700 located between the two is excessively small. During the assembly and use of the lid assembly 1000, the above portion of the insulating and sealing structure 700 may fracture as well under the combined action of the first end 124 and the protruding portion 220. If L₁ is excessively large, in one situation, the outer diameter of the first fixing portion 120 may be excessively large, and the first fixing portion 120 may occupy an excessively large area on the first surface 112, structural components connected onto the lid base 110 may thus not be reasonably arranged. In another situation, the cross-sectional area of the electrode terminal base 210 perpendicular to the centerline may be excessively small, so that the electrical performance of the electrode terminal 200 may adversely affected, the electrode terminal 200 may overheat easily, and the risk of thermal runaway of the cell may also increase.

To avoid the above problems, in this embodiment, H₁ is designed as 0.9 mm≤ H₁≤1.2 mm and L₁ is designed as 0.3 mm≤ L₁≤0.5 mm, so the risk of fracturing of the insulating and sealing structure 700 is reduced, the insulating performance, the sealing performance, and the structural strength of the insulating and sealing structure 700 are ensured, and that the electrode terminal 200 and the lid 100 are ensured to form a reliable connection. Further, the height of the electrode terminal 200 is lowered, so as to effectively control the material costs of the electrode terminal 200, the space occupied by the electrode terminal 200 in the cell is reduced, and the energy density of the cell is thus improved. The electrical performance of the electrode terminal 200 is also improved, and the risk of thermal runaway of the cell is reduced. In addition, the space occupied by the first fixing portion 120 on the first surface 112 may also be effectively controlled, so that the arrangement of structural components connected to the lid base 110 is reasonable.

As shown in FIG. 5 and FIG. 6, in some embodiments, the second fixing portion 130 further extends from the second surface 113 in the first direction toward a direction away from the lid base 110, such that the second fixing portion 130 protrudes from the lid base 110 in the first direction.

The second fixing portion 130 includes a second end surface 134 away from the lid base 110. The portion of the second fixing portion 130 close to the lid base 110 extends in the first direction toward a direction away from the lid base 110, and the portion close to the second end surface 134 extends toward the centerline of the electrode terminal 200, that is, the second fixing portion 130 has a bent structure

Taking the structure and direction shown in FIG. 5 as an example for illustration, the second fixing portion 130 protrudes downward from the second surface 113, which may cause the accommodating space 140 to move downward. In this way, the height by which the electrode terminal 200 protrudes upward from the first surface 112 may be correspondingly reduced, so that the space occupied by the cell as a whole is reduced. When the cell forms a battery pack, more cells may be arranged in the battery pack, the energy density of the battery pack may be improved.

As shown in FIG. 5 and FIG. 6, in some embodiments, the edge of the protruding portion 220 close to the first end 124 is provided with a chamfer 800, and/or the edge of the first end 124 close to the protruding portion 220 is provided with a chamfer 800.

Arrangement of the chamfer 800 at the edge of the protruding portion 220 may reduce the risk of stress concentration in the protruding portion 220. Similarly, arrangement of the chamfer 800 at the edge of the first end 124 may reduce the risk of stress concentration in the first end 124 as well.

At the same time, if both the edge of the protruding portion 220 close to the first end 124 and the edge of the first end 124 close to the protruding portion 220 form sharp structures (e.g., sharp edges, sharp corners or burrs), then the sharp structures may cause significant damage to the insulating and sealing structure 700 between the first end 124 and the protruding portion 220. The insulating and sealing structure 700 may fracture under the action of the sharp structures, and that the insulating performance, the sealing performance, and the structural strength of the insulating and sealing structure 700 may be adversely affected.

In this embodiment, arrangement of the chamfer 800 at the edge of the protruding portion 220 close to the first end 124 and/or the edge of the first end 124 close to the protruding portion 220 may avoid the formation of sharp structures at the above-mentioned edges, so that the insulating performance, the sealing performance, and the structural strength of the insulating and sealing structure 700 are ensured, and that the electrode terminal 200 and the lid 100 are ensured form a reliable connection.

As shown in FIG. 5 and FIG. 6, in some embodiments, the first fixing portion 120 includes a first inner wall 121, the second fixing portion 130 includes a second inner wall 132, and the accommodating space 140 is formed by the first inner wall 121, the second inner wall 132, and a transition portion 160 connecting the first inner wall 121 and the second inner wall 132.

It should be noted that the first inner wall 121, the second inner wall 132, and the transition portion 160 are all arranged around the centerline of the electrode terminal 200.

The transition portion 160 may avoid the formation of sharp structures at the connection between the first inner wall 121 and the second inner wall 132, thereby effectively preventing stress concentration at the above-mentioned connection, which may cause fracture between the first fixing portion 120, the second fixing portion 130, and the lid base 110, and that the connection reliability among the three is improved.

As shown in FIG. 6, in some embodiments, the transition portion 160 includes an inclined surface, an arc surface, or a stepped surface connected to the first inner wall 121 and the second inner wall 132.

Referring to FIG. 6, if the transition portion 160 of this embodiment is not provided between the second inner wall 132 and the first inner wall 121, a sharp right-angle structure may be formed between the second inner wall 132 and the first inner wall 121, such as the right-angle dashed line between the first inner wall 121 and the second inner wall 132 in FIG. 6.

When the transition portion 160 having an inclined surface is provided between the first inner wall 121 and the second inner wall 132, the first inner wall 121 and the second inner wall 132 may not only form a relatively smooth transition through the above-mentioned inclined surface, but compared to the sharp right-angle structure, the transition portion 160 also has a material supplementing effect. In this way, the structural strength at the connection between the second fixing portion 130 and the lid base 110 is improved, and the connection reliability between the second fixing portion 130 and the lid base 110 is also improved.

As shown in FIG. 5 and FIG. 6, in some embodiments, the insulating and sealing structure 700 includes a sealing portion 710, the sealing portion 710 is at least located between the protruding portion 220 and the second inner wall 132 and extends in the second direction between the protruding portion 220 and the transition portion 160.

Exemplarily, the sealing portion 710 may be sleeved on the electrode terminal base 210 and arranged around a circumference of the electrode terminal base 210.

Exemplarily, a material of the sealing portion 710 may include an elastic insulating material, for example, rubber or plastic.

Taking the structure and direction shown in FIG. 6 as an example for illustration, the lower surface of the protruding portion 220 and the second inner wall 132 may be matched with each other to press the sealing portion 710 located between the two together, so that this portion of the sealing portion 710 pressed and deformed to achieve a sealing effect. Meanwhile, the sealing portion 710 extends upward between the protruding portion 220 and the transition portion 160, so that the contact area between the sealing portion 710 and the inner wall of the accommodating space 140 may be increased. As such, the sealing performance of the sealing portion 710 is improved, insulation and isolation between the protruding portion 220 and the transition portion 160 are formed through the sealing portion 710, contact between the protruding portion 220 and the transition portion 160 is prevented, and the insulation reliability between the electrode terminal 200 and the lid 100 is thus improved.

As shown in FIG. 6, in some embodiments, in the first direction, projections of the sealing portion 710, the protruding portion 220, and the second inner wall 132 partially overlap, and a minimum dimension of an overlapping region in the second direction is L₂, where L₂≥0.8 mm.

It should be noted that the overlapping region is annular around the centerline of the electrode terminal 200, and L₂ is a size of the overlapping region located on one side of the centerline of the electrode terminal 200 in the second direction.

Exemplarily, L₂ may be 0.8 mm, 1 mm, 1.2 mm, 1.4 mm, 1.6 mm, 1.8 mm, 2 mm, 2.5 mm, 3 mm, 3.5 mm, or 4 mm.

Exemplarily, L₂ may be a gap distance between the end portion of the protruding portion 220 and the adjacent second end surface 134.

Combining the foregoing content, it can be known that the protruding portion 220 of the electrode terminal 200 and the second inner wall 132 of the second fixing portion 130 press the sealing portion 710, so that the sealing portion 710 achieves sealing. Correspondingly, the portion where the protruding portion 220 and the second inner wall 132 spatially overlap is the effective sealing portion of the sealing portion 710.

If L₂ is excessively small, the size of the effective sealing portion of the sealing portion 710 in the second direction is then excessively small, and the sealing reliability of the sealing portion 710 is relatively low.

To avoid the above problems, in this embodiment, L₂ is designed as L₂≥0.8 mm, so that the width of the effective sealing portion of the sealing portion 710 is ensured to meet the sealing needs, and the sealing reliability of the sealing portion 710 is thus improved.

Meanwhile, if L₂ is excessively large, in one situation, the size of the accommodating space 140 in the second direction may be excessively large, and the size of the protruding portion 220 in the second direction may be excessively large. In this case, the accommodating space 140 may occupy too much space of the lid base 110, which is unfavorable for the distribution of other structural components on the lid base 110. In another situation, the outer diameter of the electrode terminal base 210 may be excessively small, and the electrical performance of the electrode terminal 200 may thus be adversely affected.

To avoid the above problems, L₂ may be limited to L₂<4 mm, so as to ensured that various structural components on the lid base 110 may be reasonably arranged. In this way, the electrical performance of the electrode terminal 200 is improved, and the risk of thermal runaway of the cell is reduced.

As shown in FIG. 5 and FIG. 6, in some embodiments, the insulating and sealing structure 700 includes an upper insulating portion 720, the electrode terminal 200 and the first fixing portion 120 are connected through the upper insulating portion 720, and the upper insulating portion 720 is connected to the sealing portion 710 and fills the accommodating space 140.

Exemplarily, the upper insulating portion 720 may be formed by injection molding of an insulating material.

Combining FIG. 5 and FIG. 6, it can be seen that most of the electrode terminal 200 is located within the accommodating space 140. When the upper insulating portion 720 and the sealing portion 710 are connected within the accommodating space 140 and fill the accommodating space 140, a continuous insulating and sealing structure 700 with a certain width (size in the second direction) is formed between the electrode terminal 200 and the inner wall of the accommodating space 140. This portion of the insulating and sealing structure 700 not only has strong structural strength, which can ensure stable and reliable connection between the electrode terminal 200 and the lid 100, but also has insulating properties, which can reliably insulate between the electrode terminal 200 and the lid 100 and also fills the gaps within the accommodating space 140. As such, the electrolyte in the cell cannot leak outward through the accommodating space 140, and the safety of the cell is thus improved.

As shown in FIG. 5 and FIG. 6, in some embodiments, the upper insulating portion 720 extends to a side of the first fixing portion 120 away from the accommodating space 140 and is connected to the first surface 112.

In this embodiment, the upper insulating portion 720 covers the first fixing portion 120, so that the contact area between the upper insulating portion 720 and the surface of the lid 100 is increased, and the connection reliability between the upper insulating portion 720 and the lid 100 is further improved.

Further, the upper insulating portion 720 may also provide covering protection for the first fixing portion 120, so the first fixing portion 120 is prevented from being damaged by external impact, and failure of the limiting effect of the first fixing portion 120 on the insulating and sealing structure 700 within the accommodating space 140 is also avoided.

As shown in FIG. 6, in some embodiments, in the first direction, the upper insulating portion 720 includes a fourth surface 721 away from the second surface 113. The first fixing portion 120 includes a fifth surface 122 away from the second surface 113. The fourth surface 721 is located on a side of the fifth surface 122 away from the second surface 113. A minimum linear distance between the fourth surface 721 and the fifth surface 122 is H₂, where H₂≥0.2 mm.

Exemplarily, H₂ may be 0.2 mm, 0.3 mm, 0.4 mm, 0.5 mm, 0.6 mm, 0.7 mm, 0.8 mm, 0.9 mm, 1 mm, 1.5 mm, or 2 mm.

Taking the structure and direction shown in FIG. 6 for illustration, the fourth surface 721 is a top surface of the portion of the upper insulating portion 720 located above the first fixing portion 120, and the fifth surface 122 is a top surface of the first fixing portion 120.

When injection molding the upper insulating portion 720, the flowing injection molding material usually flows from a side of the first fixing portion 120 away from the electrode terminal base 210 in the second direction into the accommodating space 140. If H₂ is excessively small, it indicates that a spacing distance between a cavity top surface of the mold and the fifth surface 122 in the first direction is excessively small, and the injection molding material is not easy to pass through the gap between the cavity top surface and the fifth surface 122, which may result in insufficient injection molding material flowing into the accommodating space 140. As such, molding quality of the formed upper insulating portion 720 is unfavorable, a reliable connection is not formed between the electrode terminal base 210 and the lid 100, and the insulating performance and the sealing performance between the electrode terminal 200 and the lid 100 are not ensured.

To avoid the above problems, in this embodiment, H₂ is designed as H₂≥0.2 mm, to ensure that when forming the upper insulating portion 720 through mold injection molding, there is sufficient gap between the cavity top surface and the fifth surface 122, so that the flowing injection molding material can smoothly enter the accommodating space 140, and the molding quality of the upper insulating portion 720 is thus ensured.

As shown in FIG. 6, in some embodiments, the first end 124 includes a first end surface 1241 close to the electrode terminal base 210 in the second direction, the fifth surface 122 is connected to the first end surface 1241, and at least a partial region of the fifth surface 122 is parallel to the fourth surface 721.

Taking the structure and direction shown in FIG. 6 as an example for illustration, the first end surface 1241 is a vertical surface, and both the fifth surface 122 and the fourth surface 721 are horizontal surfaces. If the fifth surface 122 is an upward inclined surface, then the sharp edge between the fifth surface 122 and the first end surface 1241 would directly face the fourth surface 721. When the fourth surface 721 is subjected to external force pressing, the upper insulating portion 720 located between the fourth surface 721 and the fifth surface 122 may fracture under the action of the above sharp edge.

To avoid the above situation, in this embodiment, at least a partial region of the fifth surface 122 is designed to be parallel to the fourth surface 721, which may prevent the upper insulating portion 720 between the fifth surface 122 and the fourth surface 721 from contacting the sharp edge, and the risk of fracturing of the upper insulating portion 720 is thus reduced.

As shown in FIG. 5 and FIG. 6, in some embodiments, in the second direction, the first fixing portion 120 includes a first outer side wall 123 away from the accommodating space 140, and the second fixing portion 130 includes a second outer side wall 133 away from the accommodating space 140. The first outer side wall 123 is connected to the first surface 112 and forms a first connecting portion a, and the second outer side wall 133 is connected to the second surface 113 and forms a second connecting portion b. In the second direction, a linear distance from the first connecting portion a to the centerline of the electrode terminal 200 is L₃, and a linear distance from the second connecting portion b to the centerline of the electrode terminal 200 is L₄, where L₄<L₃.

Exemplarily, both the first outer side wall 123 and the second outer side wall 133 are arranged around the centerline of the electrode terminal 200. Correspondingly, the first connecting portion a is a closed circular or a polygon, and the second connecting portion b is also a closed circular or a polygon.

Combined with the foregoing content, it can be known that in the second direction, the first fixing portion 120 is located on the side of the protruding portion 220 away from the centerline of the electrode terminal 200, while the second fixing portion 130 needs to spatially overlap with the protruding portion 220 to limit the protruding portion 220. Therefore, in the second direction, the second fixing portion 130 may be positioned relatively close to the centerline of the electrode terminal 200, so as to ensure that the second fixing portion 130 can reliably limit the protruding portion 220, while the first fixing portion 120 may be positioned relatively far from the centerline of the electrode terminal 200, so as to prevent the first fixing portion 120 from obstructing the protruding portion 220 of the electrode terminal 200 from entering the accommodating space 140.

Meanwhile, the first connecting portion a and the second connecting portion b are arranged in a staggered manner in the second direction, which may also avoid stress concentration in the lid base 110 caused by alignment of the first connecting portion a and the second connecting portion b. In this way, reliable connection among the first fixing portion 120, the second fixing portion 130, and the lid base 110 is ensured.

As shown in FIG. 5 and FIG. 6, in some embodiments, the second surface 113 is provided with a material squeezing groove 111 surrounding the second fixing portion 130. In the second direction, the material squeezing groove 111 extends to the second connecting portion b, and in the first direction, a projection of the first connecting portion a on the second surface 113 is located within the material squeezing groove 111.

Exemplarily, the material squeezing groove 111 is an annular groove surrounding the second fixing portion 130.

When forming the lid 100, the material squeezing groove 111 may be formed by pressing the second surface 113. It can be understood that after forming the material squeezing groove 111, the material at the original position of the material squeezing groove 111 may be pressed and moved to adjacent positions, so that the structural strength of the structures adjacent to the material squeezing groove 111 is improved.

Taking the structure and direction shown in FIG. 6 as an example for illustration, the second fixing portion 130 is located on the left side of the material squeezing groove 111, with both being adjacent to each other, and the first fixing portion 120 is located above the material squeezing groove 111. Therefore, after forming the material squeezing groove 111, the material at the original position of the material squeezing groove 111 will move toward the connection between the first fixing portion 120 and the lid base 110, as well as toward the connection between the second fixing portion 130 and the lid base 110. As such, the structural strength at the connection between the first fixing portion 120 and the lid base 110 as well as the structural strength at the connection between the second fixing portion 130 and the lid base 110 are improved, and fracture of the first connecting portion a and the second connecting portion b is prevented.

As shown in FIG. 5 and FIG. 6, in some embodiments, the electrode terminal base 210 includes a second end surface 211 close the fourth surface 721 in the first direction. In the first direction, the second end surface 211 at least partially extends beyond the fourth surface 721.

Exemplarily, the second end surface 211 may be a flat surface, an arc surface, or a stepped surface.

It can be understood that at least a partial region of the second end surface 211 is used for electrical connection to an external circuit (e.g., a bus component or a sheet, etc.). When the second end surface 211 is electrically connected to an external circuit, if the upper insulating portion 720 interferes with the external circuit, it may cause the external circuit and the second end surface 211 to be unable to fit tightly, thereby causing inability to form reliable electrical connection between the two, and safety risks may thus occur.

To avoid the above problems, in this embodiment, the second end surface 211 is designed to at least partially extend beyond the fourth surface 721, so that when an external circuit contacts the second end surface 211, it can ensure that a gap is still maintained between the external circuit and the fourth surface 721. As such, interference between the external circuit and the fourth surface 721 is avoided, and the external circuit and the second end surface 211 may be ensured to form reliable electrical connection.

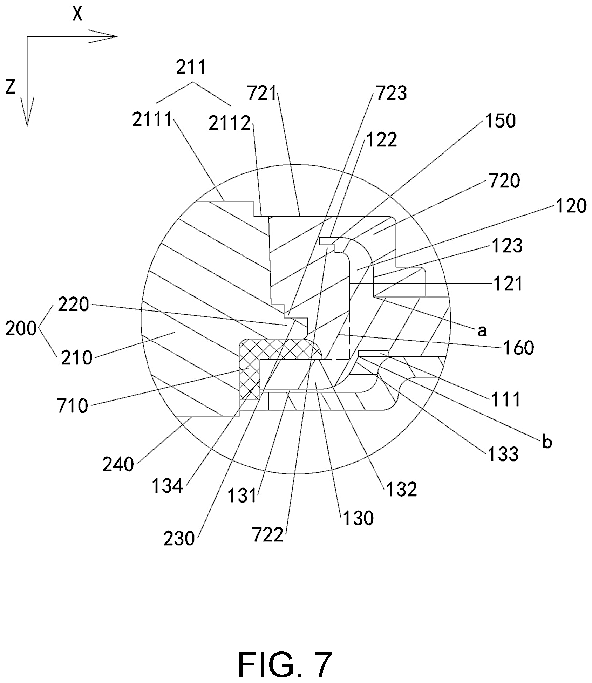

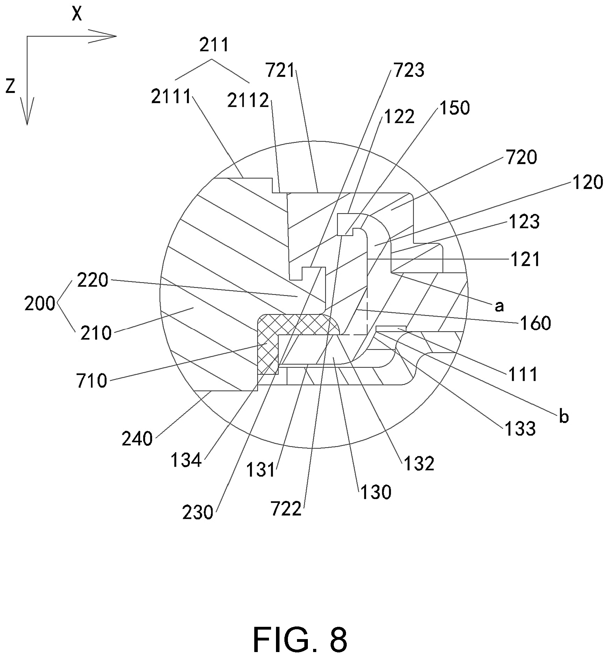

FIG. 7 shows an enlarged schematic view of a fourth structure of the portion C in FIG. 5, and FIG. 8 shows an enlarged schematic view of a fifth structure of the portion C in FIG. 5.

As shown in FIG. 7 and FIG. 8, in some embodiments, the first fixing portion 120 is provided with a first anti-rotation structure 150, and the upper insulating portion 720 is formed with a first insulating anti-rotation structure 722. One of the first anti-rotation structure 150 and the first insulating anti-rotation structure 722 is a groove structure, and the other is a protruding structure fitted within the groove structure, and/or the electrode terminal 200 is provided with a second anti-rotation structure 230, and the upper insulating portion 720 is formed with a second insulating anti-rotation structure 723. One of the second anti-rotation structure 230 and the second insulating anti-rotation structure 723 is a groove structure, and the other is a protruding structure fitted within the groove structure.

Exemplarily, a plurality of first anti-rotation structures 150 are provided and arranged at intervals around the centerline of the electrode terminal 200.

Exemplarily, the upper insulating portion 720 may be formed by injection molding. During injection molding, if the first anti-rotation structure 150 is a protrusion, the injection molding material wraps around the protrusion and forms a groove after curing. If the first anti-rotation structure 150 is a groove, the injection molding material fills the groove and forms a protrusion after fixing.

Exemplarily, a plurality of second anti-rotation structures 230 are provided and arranged at intervals around the centerline of the electrode terminal 200.

Exemplarily, the upper insulating portion 720 may be formed by injection molding. During injection molding, if the second anti-rotation structure 230 is a protrusion, the injection molding material wraps around the protrusion and forms a groove after curing. If the second anti-rotation structure 230 is a groove, the injection molding material fills the groove and forms a protrusion after fixing.

It should be noted that as shown in FIG. 7, the first anti-rotation structure 150 is a groove, and the first insulating anti-rotation structure 722 is a protrusion fitted within the groove. As shown in FIG. 8, the first insulating anti-rotation structure 722 is a groove, and the first anti-rotation structure 150 is a protrusion fitted within the groove.

When the first anti-rotation structure 150 and the first insulating anti-rotation structure 722 are fitted and connected, a reliable connection may be ensured between the upper insulating portion 720 and the first fixing portion 120, and relative movement or rotation between them is thus avoided. Meanwhile, combined with the above content, it may be known that the electrode terminal 200 is connected to the first fixing portion 120 of the lid 100 through the upper insulating portion 720. Therefore, when the upper insulating portion 720 and the first fixing portion 120 will not undergo relative rotation, stable connection between the electrode terminal 200 and the lid 100 may be achieved, and relative torsion is prevented between the two.

For the cell using the lid assembly 1000 of this embodiment, when the cell is fixed, the lid 100 is correspondingly fixed. Further, since the electrode terminal 200 and the lid 100 may maintain relative stillness under the action of the upper insulating portion 720 without relative torsion, it may be ensured that the electrode terminal 200 may form reliable connection with an external circuit, and it may also be ensured that the electrode terminal 200 may achieve reliable pressing on the sealing portion 710. As such, failure of the sealing portion 710 is prevented, and leakage of electrolyte inside the cell is avoided.

It should be noted that as shown in FIG. 7, the second insulating anti-rotation structure 723 is a groove, and the second anti-rotation structure 230 is a protrusion fitted within the groove. As shown in FIG. 8, the second anti-rotation structure 230 is a groove, and the second insulating anti-rotation structure 723 is a protrusion fitted within the groove.

The beneficial effects when the second anti-rotation structure 230 and the second insulating anti-rotation structure 723 are fitted and connected are similar to the aforementioned beneficial effects when the first anti-rotation structure 150 and the first insulating anti-rotation structure 722 are fitted and connected, and so description thereof is not repeated herein.

In some embodiments, the second fixing portion 130 includes a third surface 131 extending away from the first fixing portion 120 in the first direction, and the electrode terminal base 210 extends beyond the third surface 131 in the first direction.

The electrode terminal base 210 extending beyond the third surface 131 may facilitate electrical connection between the end portion of the electrode terminal base 210 and the tab of the electrode assembly 3000. Meanwhile, it helps to separate the tab from the second fixing portion 130, and insulation between the two is thus implemented.

Based on the same inventive concept, combined with the description of the lid assembly 1000 of the above embodiments, in this embodiment, a method of assembling the lid assembly 1000 is provided. The method of assembling the lid assembly 1000 has corresponding technical effects of the lid assembly 1000 of the above embodiments, so description thereof is not repeated herein.

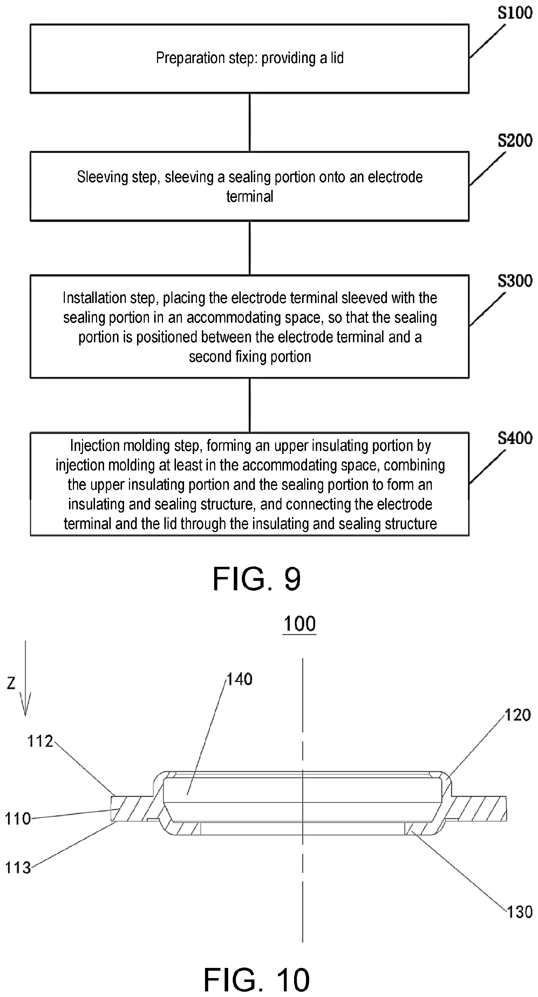

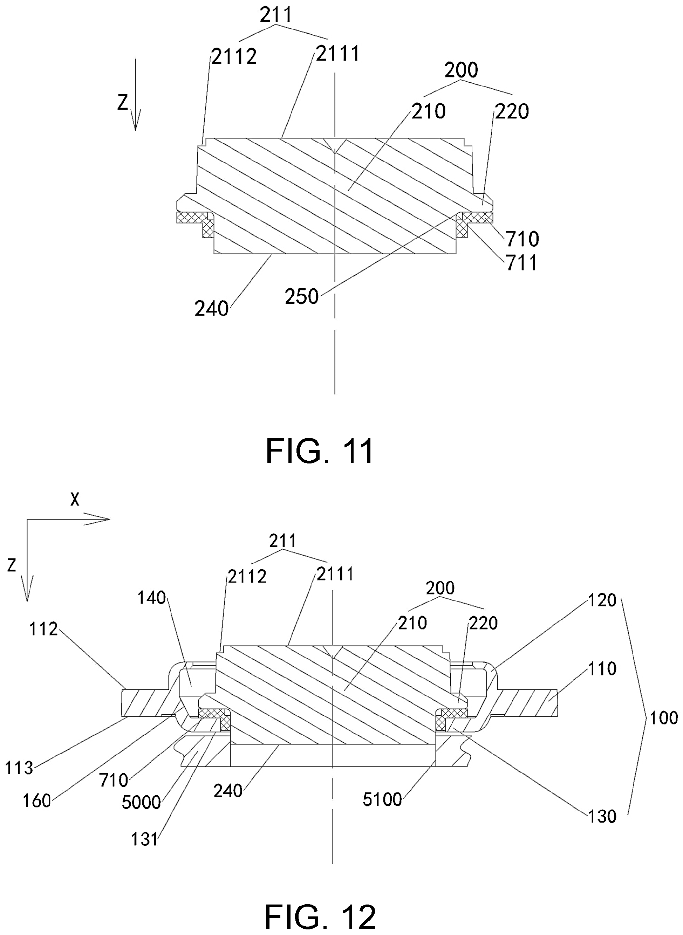

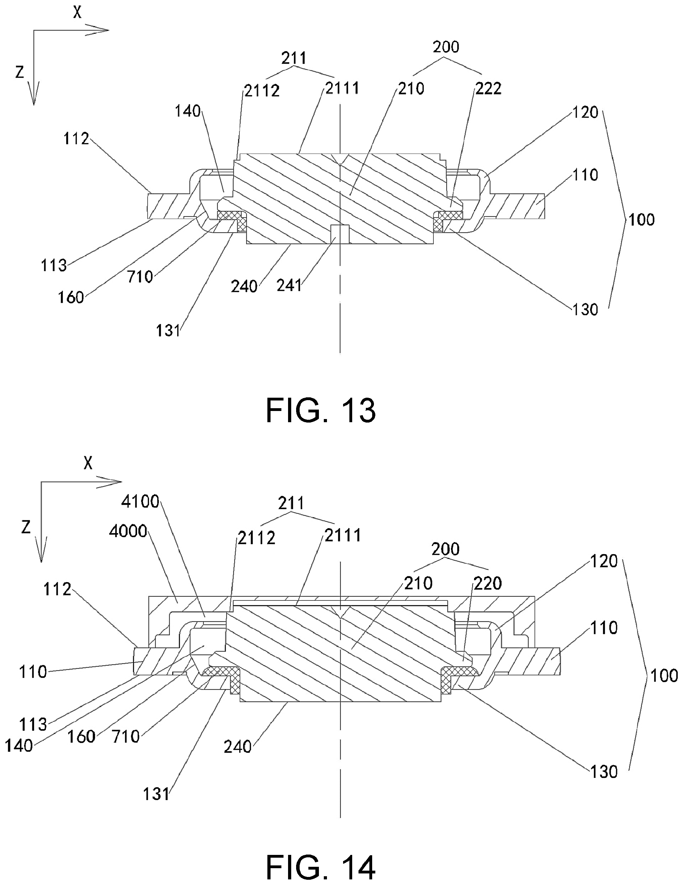

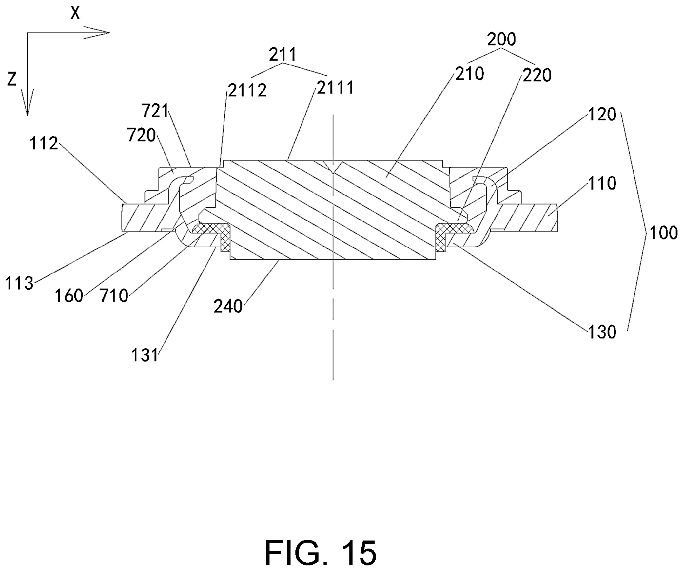

FIG. 9 shows a flow chart of a method of assembling a lid assembly according to an embodiment of the disclosure. FIG. 10 shows a partial cross-sectional schematic view of the lid assembly 100 of the third structure before the electrode terminal 200 is assembled. FIG. 11 shows a partial cross-sectional schematic view of the electrode terminal 200 connected with the sealing portion 710 in the lid assembly 1000 of the third structure. FIG. 12 shows a partial cross-sectional schematic view of the electrode terminal 200 in the lid assembly 1000 of the third structure inserted into the accommodating space 140. FIG. 13 is a partial cross-sectional schematic view of an electrode terminal 200 in a lid assembly 1000 of a sixth structure inserted into the accommodating space 140. FIG. 14 is a partial cross-sectional schematic view of pressing the electrode terminal 200 through an injection molding mold 4000 in the lid assembly 1000 of the third structure. FIG. 15 is a partial cross-sectional schematic view of the lid assembly 1000 of the third structure after the upper insulating portion 720 is formed.

As shown in FIG. 9, a method of assembling the lid assembly 1000 provided in this embodiment is used to prepare the lid assembly 1000 of each of the above embodiments. The method of assembling the lid assembly 1000 includes the following steps.

As shown in FIG. 10, in S100, in a preparation step, the lid 100 is provided.

It should be noted that in the preparation step, the first fixing portion 120 and the second fixing portion 130 have been formed according to the design structure, and no further machining and processing of the first fixing portion 120 and the second fixing portion 130 are required in the subsequent assembly process. In the preparation step, the accommodating space 140 may be cleaned to remove a metal foreign object within the accommodating space 140.

As shown in FIG. 11, S200, sleeving step, sleeving the sealing portion 710 onto the electrode terminal 200.

It should be noted that there is no sequential order between the preparation step and the sleeving step, that is, the sleeving step may be performed first and then the preparation step, or the preparation step and the sleeving step may be performed at the same time.

Before the electrode terminal 200 is inserted into the accommodating space 140 of the lid 100, the sealing portion 710 may be connected to the protruding portion 220 of the electrode terminal 200 first through adhesive bonding, hot pressing, or sleeving to lower the installation difficulty of the sealing portion 710. When connecting the sealing portion 710 to the electrode terminal 200, it is necessary to ensure that after the electrode terminal 200 is inserted into the accommodating space 140, the sealing portion 710 can contact the second fixing portion 130, and the protruding portion 220 and the second fixing portion 130 are located on opposite sides of the sealing portion 710 in the first direction, so that the protruding portion 220 and the second fixing portion 130 can work together to jointly press the sealing portion 710.

As shown in FIG. 12 and FIG. 13, in S300, in an installation step, the electrode terminal 200 sleeved with the sealing portion 710 is placed in the accommodating space 140, so that the sealing portion 710 is positioned between the electrode terminal 200 and the second fixing portion 130.

The electrode terminal 200 connected with the sealing portion 710 may directly pass through the first inner hole and be installed into the accommodating space 140. Moreover, the second fixing portion 130 will provide a limiting function for the protruding portion 220, keeping the protruding portion 220 within the accommodating space 140.

The electrode terminal base 210 may pass through the second inner hole and extend out of the accommodating space 140, facilitating positioning of the electrode terminal 200 itself or between the electrode terminal 200 and the lid 100.

As shown in FIG. 14 and FIG. 15, in S400, in an injection molding step, the upper insulating portion 720 is formed by injection molding at least in the accommodating space 140, the upper insulating portion 720 and the sealing portion 710 are combined to form the insulating and sealing structure 700, and the electrode terminal 200 and the lid 100 are connected through the insulating and sealing structure 700.

Taking the structure and direction shown in FIG. 14 as an example for illustration, the electrode terminal base 210 is pressed downward, and the lid 100 is kept in the current position. During the process of the electrode terminal 200 moving downward under pressure, the protruding portion 220 presses the sealing portion 710 downward, while the second fixing portion 130 supports the sealing portion 710 upward. Under the combined action of the protruding portion 220 and the second fixing portion 130, the sealing portion 710 will deform under pressure, such that a seal is formed at least between the protruding portion 220 and the second fixing portion 130.

Thereafter, the sealing portion 710 is kept in pressed and deformed state, and the upper insulating portion 720 is formed through an injection molding process. After the upper insulating portion 720 connects the first fixing portion 120 and the electrode terminal base 210, the relative position between the electrode terminal 200 and the lid 100 can be fixed, enabling the electrode terminal 200 and the lid 100 to form a reliable connection. Meanwhile, the upper insulating portion 720 in the accommodating space 140 is connected to the sealing portion 710 and fills the accommodating space 140, which can ensure good insulation and sealing between the electrode terminal 200 and the lid 100.

As shown in FIG. 13, in some embodiments, in the first direction, the electrode terminal 200 includes a third end surface 240 close to the second fixing portion 130, and the third end surface 240 is provided with a first positioning hole 241.

After the installation step and before the injection molding step, the method of assembling the lid assembly 1000 further includes the following.

In S500, in a positioning step, the electrode terminal 200 is positioned in the second direction through the first positioning hole 241.

A positioning pin may be provided on the side of the second fixing portion 130 away from the first fixing portion 120. A cross-sectional shape of the positioning pin perpendicular to the centerline of the electrode terminal 200 may be the same as a cross-sectional shape of the first positioning hole 241 perpendicular to the centerline of the electrode terminal 200, and a centerline of the positioning pin coincides with the a of the accommodating space 140.

During the process of inserting the electrode terminal 200 into the accommodating space 140, the positioning pin needs to be inserted into the first positioning hole 241. Through the matching of the positioning pin and the first positioning hole 241, the electrode terminal 200 is driven to move in the second direction, so that the centerline of the electrode terminal 200 coincides with the centerline of the accommodating space 140, and that positioning of the electrode terminal 200 in the second direction is achieved.

As shown in FIG. 12, in some embodiments, in the first direction, the electrode terminal 200 includes the third end surface 240 close to the second fixing portion 130.

After the installation step and before the injection molding step, the method of assembling the lid assembly 1000 further includes the following.

In S600, in a positioning step, in the first direction, the third end surface 240 is allowed to extend beyond the second fixing portion 130, and the electrode terminal 200 is positioned in the second direction through an edge of the third end surface 240.

An annular structure 5000 may be provided on the side of the second fixing portion 130 away from the first fixing portion 120. A cross-sectional shape of an annular structure inner hole 5100 perpendicular to the centerline of the electrode terminal 200 may be the same as a cross-sectional shape of the third end surface 240 perpendicular to the centerline of the electrode terminal 200, and a centerline of the annular structure inner hole 5100 coincides with the centerline of the accommodating space 140.

During the process of inserting the electrode terminal 200 into the accommodating space 140, the third end surface 240 needs to be inserted into the annular structure inner hole 5100. Through the matching of the annular structure inner hole 5100 and the third end surface 240, the electrode terminal 200 is driven to move in the second direction, so that the centerline of the electrode terminal 200 coincides with the centerline of the accommodating space 140, and that positioning of the electrode terminal 200 in the second direction is achieved.

As shown in FIG. 14 and FIG. 15, in some embodiments, the electrode terminal base 210 includes the second end surface 211 close to the first fixing portion 120 in the first direction. The second end surface 211 includes a first portion 2111 and a second portion 2112 surrounding the first portion 2111. In the first direction, the first portion 2111 protrudes from the second portion 2112 in a direction away from the second fixing portion 130.

The injection molding step includes the following.

An injection molding mold 4000 is fixed through the second portion 2112, and the upper insulating portion 720 is formed by injection molding through the injection molding mold 4000, so that the upper insulating portion 720 does not extend beyond the second portion 2112 in the first direction.

Taking the structure and direction shown in FIG. 15 as an example for illustration, the first portion 2111 is used to achieve electrical connection with an external circuit. The second portion 2112 is located below the first portion 2111, and as long as it is ensured that a top portion of the upper insulating portion 720 does not extend beyond the second portion 2112, then the upper insulating portion 720 as a whole will not interfere with the external circuit.

It should be noted that an inner wall of the injection molding mold 4000, an upper surface of the lid base 110, and an outer surface of the first fixing portion 120 (including the first outer side wall 123 and the fifth surface 122) together form an injection molding cavity 4100. The injection molding mold 4000 is formed with a material inlet communicating with the injection molding cavity 4100, and through the material inlet, a flowing injection molding material may be injected into the injection molding cavity 4100.

The first portion 2111 and the second portion 2112 are configured as a stepped surface, with the first portion 2111 located in the middle having a higher height, and the second portion 2112 located at the edge having a lower height. When forming the upper insulating portion 720 through injection molding, a mold covers the first fixing portion 120 and the electrode terminal 200, and an inner wall of the mold presses downward against the second portion 2112. At this time, a seal is formed between the inner wall of the mold and the second portion 2112, so that the flowing injection molding material is prevented from entering between the two and causing leakage. Similarly, after the injection molding mold 4000 abuts against the first surface 112, a seal is formed between the injection molding mold 4000 and the first surface 112, which may also prevent the flowing injection molding material from entering between the two and causing leakage. At this time, the injection molding mold 4000, the lid 100, the electrode terminal 200, and the sealing portion 710 may form the sealed injection molding cavity 4100 and accommodating space 140 for accommodating the flowing injection molding material, so that the upper insulating portion 720 is formed.

After the flowing injection molding material enters the injection molding cavity 4100, it fills the injection molding cavity 4100 and flows toward the accommodating space 140 until the accommodating space 140 is filled. After the injection molding material is cured, the injection molding mold 4000 may be removed. At this time, the electrode terminal 200 and the lid 100 have formed a reliable connection through the upper insulating portion 720, the relative position between the two remains unchanged, and the sealing portion 710 also maintains a pressed and deformed state. Meanwhile, under the restriction of the injection molding mold 4000, the upper insulating portion 720 does not extend beyond the second portion 2112 in the first direction.

As shown in FIG. 11, in some embodiments, the electrode terminal 200 includes the columnar electrode terminal base 210 and the protruding portion 220 protruding from the electrode terminal base 210 in the second direction. The sealing portion 710 is provided with an avoidance groove 711, and a connecting structure 250 is formed between a circumferential side wall of the electrode terminal base 210 and the protruding portion 220.

The sleeving step includes the following.

The sealing portion 710 is sleeved onto the electrode terminal 200, and the avoidance groove 711 is allowed to correspond to the connecting structure 250.

Exemplarily, the connecting structure 250 may include an inclined surface, an arc surface, or a stepped surface.

When the sealing portion 710 is sleeved onto the electrode terminal base 210, if interference occurs between the sealing portion 710 and the connecting structure 250, it may cause the sealing portion 710 to be unable to closely fit with the protruding portion 220, and the insulating performance of the sealing portion 710 may thus be adversely affected.

To avoid the above problems, in this embodiment, the avoidance groove 711 is provided on the sealing portion 710, and the avoidance groove 711 corresponds to the connecting structure 250. When sleeving the sealing portion 710 onto the electrode terminal base 210, the connecting structure 250 may enter the avoidance groove 711, so that the connecting structure 250 maintains a spacing from the sealing portion 710. In this way, interference between the connecting structure 250 and the sealing portion 710 is prevented, and the sealing portion 710 is ensured to closely fit with the protruding portion 220, so that the protruding portion 220 is ensured to effectively press the sealing portion 710, and that the sealing portion 710 may achieve a sealing effect.

It should be noted that as shown in FIG. 12 and FIG. 13, when the sealing portion 710 is not pressed by the protruding portion 220, the top end of the sealing portion 710 may not extend beyond the end portion of the protruding portion 220 in the second direction, and a bottom end of the sealing portion 720 may not extend beyond the third surface 131 of the second fixing portion 130. As shown in FIG. 14 and FIG. 15, when the sealing portion 710 is pressed and deformed, it achieves a sealing function. At this time, the top end of the sealing portion 710 may extend upward between the protruding portion 220 and the transition portion 160, and the bottom end of the sealing portion 720 extends out of the accommodating space 140 and beyond the third surface 131 of the second fixing portion 130.

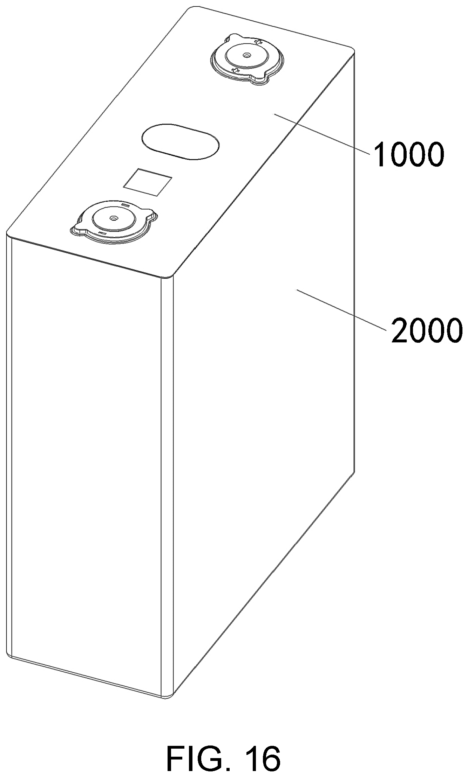

FIG. 16 shows schematic view of a cell.

Based on the same inventive concept, in combination with the description of the lid assembly 1000 of the above embodiments, this embodiment provides a cell, and the cell has corresponding technical effects of the lid assembly 1000 of the above embodiments, so description thereof is not repeated in detail herein.

As shown in FIG. 16, a cell includes the lid assembly 1000 according to the above embodiments.

## Claims

1. A lid assembly (1000), comprising a lid (100), an electrode terminal (200), and an insulating and sealing structure (700), wherein the lid (100) and the electrode terminal (200) are connected through the insulating and sealing structure (700),
the lid (100) comprises a lid base (110), a first fixing portion (120), and a second fixing portion (130), the first fixing portion (120) and the second fixing portion (130) are arranged surrounding the electrode terminal (200), the lid base (110) comprises a first surface (112) and a second surface (113) arranged opposite to each other in a first direction, the first fixing portion (120) extends from the first surface (112) at least in the first direction toward a direction away from the lid base (110), the second fixing portion (130) extends from the second surface (113) at least in a second direction toward a centerline of the electrode terminal (200), the first fixing portion (120) and the second fixing portion (130) define an accommodating space (140), the electrode terminal (200) and the insulating and sealing structure (700) are at least partially located in the accommodating space (140), the first direction is a centerline direction of the electrode terminal (200), and the second direction is perpendicular to the first direction,
wherein in the first direction, projections of the first fixing portion (120) and the electrode terminal (200) do not overlap, and projections of the second fixing portion (130) and the electrode terminal (200) overlap.

2. The lid assembly (1000) according to claim 1, wherein the electrode terminal (200) comprises a columnar electrode terminal base (210) and a protruding portion (220) protruding from the electrode terminal base (210) in the second direction, and in the first direction, projections of the second fixing portion (130) and the protruding portion (220) overlap;
wherein the protruding portion (220), the first fixing portion (120), and the second fixing portion (130) are all annular structures, a minimum diameter of an inner hole formed by the first fixing portion (120) is D₁, a minimum diameter of an inner hole formed by the second fixing portion (130) is D₂, and a maximum outer diameter of the protruding portion (220) is D₃, where D₂<D₃< D₁.

3. The lid assembly (1000) according to claim 2, wherein the first fixing portion (120) comprises a first end (124) away from the lid base (110), and a portion of the first fixing portion (120) close to the first end (124) extends toward the centerline of the electrode terminal (200);
wherein in the first direction, a minimum linear spacing distance between the first end (124) and the protruding portion (220) is H₁, 0.9 mm≤ H₁≤1.2 mm, and in the second direction, a minimum linear spacing distance between the first end (124) and the electrode terminal (200) is L₁, where 0.3 mm≤ L₁≤0.5 mm.

4. The lid assembly (1000) according to claim 3, wherein the second fixing portion (130) further extends from the second surface (113) in the first direction toward a direction away from the lid base (110), such that the second fixing portion (130) protrudes from the lid base (110) in the first direction.

5. The lid assembly (1000) according to claim 4, wherein the first fixing portion (120) comprises a first inner wall (121), the second fixing portion (130) comprises a second inner wall (132), and the accommodating space (140) is formed by the first inner wall (121), the second inner wall (132), and a transition portion (160) connecting the first inner wall (121) and the second inner wall (132);
wherein the transition portion (160) comprises an inclined surface, an arc surface, or a stepped surface connected to the first inner wall (121) and the second inner wall (132)

6. The lid assembly (1000) according to claim 5, wherein the insulating and sealing structure (700) comprises a sealing portion (710), and the sealing portion (710) is at least located between the protruding portion (220) and the second inner wall (132) and extends in the second direction between the protruding portion (220) and the transition portion (160);
wherein in the first direction, projections of the sealing portion (710), the protruding portion (220), and the second inner wall (132) partially overlap, and a minimum dimension of an overlapping region in the second direction is L₂, where L₂≥0.8 mm.

7. The lid assembly (1000) according to claim 6 wherein the insulating and sealing structure (700) comprises an upper insulating portion (720), the electrode terminal (200) is connected to the first fixing portion (120) through the upper insulating portion (720), and the upper insulating portion (720) is connected to the sealing portion (710) and fills the accommodating space (140);
wherein the upper insulating portion (720) extends to a side of the first fixing portion (120) away from the accommodating space (140) and is connected to the first surface (112).

8. The lid assembly (1000) according to claim 7, wherein in the first direction, the upper insulating portion (720) comprises a fourth surface (721) away from the second surface (113), the first fixing portion (120) comprises a fifth surface away from the second surface (113), and the fourth surface is located on a side of the fifth surface (122) away from the second surface (113), and a minimum linear distance between the fourth surface (721) and the fifth surface (122) is H₂, where H₂≥0.2 mm.

9. The lid assembly (1000) according to claim 4, wherein in the second direction, the first fixing portion (120) comprises a first outer side wall (123) away from the accommodating space (140), the second fixing portion (130) comprises a second outer side wall (133) away from the accommodating space (140), the first outer side wall (123) is connected to the first surface (112) and forms a first connecting portion (a), and the second outer side wall (133) is connected to the second surface (113) and forms a second connecting portion (b),
in the second direction, a linear distance from the first connecting portion (a) to the centerline of the electrode terminal (200) is L₃, and a linear distance from the second connecting portion (b) to the centerline of the electrode terminal (200) is L₄, where L₄< L₃.

10. The lid assembly (1000) according to claim 9, wherein the second surface (113) is provided with a material squeezing groove (111) surrounding the second fixing portion (130), in the second direction, the material squeezing groove (111) extends to the second connecting portion (b), and in the first direction, a projection of the first connecting portion (a) on the second surface (113) is located within the material squeezing groove (111).

11. A cell, comprising the lid assembly (1000) according to any one of claims 1-10, wherein the insulating and sealing structure (700) comprises an upper insulating portion (720),
the first fixing portion (120) is provided with a first anti-rotation structure (150), the upper insulating portion (720) is formed with a first insulating anti-rotation structure (722), one of the first anti-rotation structure (150) and the first insulating anti-rotation structure (722) is a groove structure, and the other is a protruding structure fitted within the groove structure, and/or,
the electrode terminal (200) is provided with a second anti-rotation structure (230), the upper insulating portion (720) is formed with a second insulating anti-rotation structure (723), one of the second anti-rotation structure (230) and the second insulating anti-rotation structure (723) is a groove structure, and the other is a protruding structure fitted within the groove structure.

12. A method of assembling a lid assembly (1000) used for manufacturing the lid assembly (1000) according to any one of claims 1-10 and comprising:
a preparation step, providing a lid (100);
a sleeving step, sleeving a sealing portion (710) onto an electrode terminal (200);
an installation step, placing the electrode terminal (200) sleeved with the sealing portion (710) in an accommodating space (140), so that the sealing portion (710) is positioned between the electrode terminal (200) and the second fixing portion (130); and
an injection molding step, forming an upper insulating portion (720) by injection molding at least in the accommodating space (140), combining the upper insulating portion (720) and the sealing portion (710) to form an insulating and sealing structure (700), and connecting the electrode terminal (200) and the lid (100) through the insulating and sealing structure (700).

13. The method of assembling the lid assembly (1000) according to claim 12, wherein in the first direction, the electrode terminal (200) comprises a third end surface (240) close to the second fixing portion (130),
after the installation step and before the injection molding step, the method of assembling the lid assembly (1000) further comprises:
a positioning step, in the first direction, allowing the third end surface (240) to extend beyond the second fixing portion (130) and positioning the electrode terminal (200) in the second direction through an edge of the third end surface (240).

14. The method of assembling the lid assembly (1000) according to claim 13, wherein the electrode terminal base (210) comprises a second end surface (211) close to the first fixing portion (120) in the first direction, the second end surface (211) comprises a first portion (2111) and a second portion (2112) surrounding the first portion (2111), in the first direction, the first portion (2111) protrudes from the second portion (2112) in a direction away from the second fixing portion (130),
the injection molding step comprises:
fixing an injection molding mold (4000) through the second portion (2112) and forming the upper insulating portion (720) by injection molding through the injection molding mold (4000), so that the upper insulating portion (720) does not extend beyond the second portion (2112) in the first direction.

15. The method of assembling the lid assembly (1000) according to claim 14, wherein the electrode terminal (200) comprises the columnar electrode terminal base (210) and a protruding portion (220) protruding from the electrode terminal base (210) in the second direction, the sealing portion (710) is provided with an avoidance groove (711), and a connecting structure (250) is formed between a circumferential side wall of the electrode terminal base (210) and the protruding portion (220);
the sleeving step comprises:
sleeving the sealing portion (710) onto the electrode terminal (200) and allowing the avoidance groove (711) to correspond to the connecting structure (250).
